# EUROPEAN PATENT APPLICATION

(11) **EP 4 759 558 A1**
(43) Date of publication of application: **17.06.2026**
(21) Application number: 25216189.8
(22) Date of filing: 17.11.2025
(51) Int. Cl.: B60C 1/00, C08L 7/00

(54) **RUBBER COMPOSITIONS AND ARTICLES THEREOF**

(30) Priority: 19.11.2024 US 202418952000; 29.09.2025 US 202519343087
(71) Applicant: The Goodyear Tire & Rubber Company, Akron, OH 44316 (US)
(72) Inventor: Lin, Chenchy Jeffrey, Akron, 44316 (US); SANDSTROM, Paul Harry, Cuyahoga Falls, 44223 (US); GOLDEN, James Joseph, North Canton, 44720 (US)
(74) Representative: Kutsch, Bernd

(57) **Abstract**

A composition is disclosed comprising an elastomer; 1 phr to 100 phr of a recovered carbon or carbon particle, the recovered carbon or carbon particle being disbursed in a masterbatch or freely added material; 1 phr to 20 phr of a silica selected from a conventional silica and a pretreated silica; and 0.5 phr to 15 phr of a reinforcing agent, wherein the reinforcing agent is a bismaleimide compound or a derivative thereof. The composition may be used as a vulcanized rubber composition in a tire. Also, a method for mixing rubber, comprising a nonproductive stage and a productive stage is disclosed.

## Description

### BACKGROUND

The demand for improved tire performance has resulted in the development and evaluation of new materials to produce tires with desirable properties. Improving tire properties such as rolling resistance while maintaining balances in tradeoffs can be challenging. For example, additives that improve adhesion properties of a rubber composition can also result in an increase in hysteresis of a tire produced from the rubber composition, resulting in a higher rolling resistance. There is a need for rubber formulations that strike a balance between processability, cost, low tire rolling resistance, and good adhesion properties. These needs and other needs are satisfied by the present invention.

There is a desire to achieve a double-digit increase - specifically, at least a 25 wt.% improvement - in sustainable material content, without compromising the performance of the tire compound. To enhance the sustainability profile of a tire composition, the invention replaces conventional fossil fuel-based carbon black with carbon black produced by burning natural gas in a tire overlay compound.

### SUMMARY OF THE INVENTION

The invention relates to a composition in accordance with claim 1, to a vulcanized composition in accordance with claim 9, to an article in accordance with claim 13 and to a method in accordance with claim 15.

Dependent claims refer to preferred embodiments of the invention.

The invention, in one aspect, relates to compositions comprising: an elastomer; a recovered carbon or carbon particle being disbursed in a masterbatch or as a freely added material; a silica, selected from a conventional silica and a pretreated silica; and about a reinforcing agent, wherein the reinforcing agent is a bismaleimide compound or a derivative thereof. Also disclosed herein are vulcanized rubber compositions and articles, such as tires or components of tires, comprising said vulcanized rubber compositions.

In another aspect, the invention relates to a method for mixing rubber, comprising a nonproductive stage and a productive stage. The nonproductive stage comprises: combining together an elastomer, a conventional silica, and a recovered carbon or carbon particle, thereby forming an initial mixture; and mixing the initial mixture at a temperature of 130 °C to 180 °C, thereby forming a nonproductive mixture. The productive stage comprises: combining together the nonproductive mixture with a bismaleimide compound or a derivative thereof and a curing agent, thereby forming an intermediate mixture; and mixing the intermediate mixture at a temperature of 90 °C to 110 °C, thereby forming a productive mixture.

### DETAILED DESCRIPTION OF PREFERRED EMBODIMENTS OF THE INVENTION

As will be apparent to those of skill in the art upon reading this invention, each of the individual aspects described and illustrated herein has discrete components and features which may be readily separated from or combined with the features of any of the other several aspects without departing from the scope or spirit of the present invention. Any recited method can be carried out in the order of events recited or in any other order that is logically possible. That is, unless otherwise expressly stated, it is in no way intended that any method or aspect set forth herein be construed as requiring that its steps be performed in a specific order.

It is also to be understood that the terminology used herein is for the purpose of describing particular aspects only and is not intended to be limiting. Unless defined otherwise, all technical and scientific terms used herein have the same meaning as commonly understood by one of ordinary skill in the art to which the disclosed compositions and methods belong. It will be further understood that terms, such as those defined in commonly used dictionaries, should be interpreted as having a meaning that is consistent with their meaning in the context of the specification and relevant art and should not be interpreted in an idealized or overly formal sense unless expressly defined herein.

Prior to describing the various aspects of the present invention, the following definitions are provided and should be used unless otherwise indicated. Additional terms may be defined elsewhere in the present invention.

### A. DEFINITIONS

As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of," "including," "includes," "included," "involving," "involves," "involved," and "such as" are used in their open, non-limiting sense and may be used interchangeably.

As used herein, the term "and/or" includes any and all combinations of one or more of the associated listed items. Expressions like "at least one of," when preceding a list of elements, modify the entire list of elements and do not modify the individual elements.

Nomenclature for compounds, including organic compounds, can be given using common names, IUPAC, IUBMB, or CAS recommendations for nomenclature. When one or more stereochemical features are present, Cahn-Ingold-Prelog rules for stereochemistry can be employed to designate stereochemical priority, E/Z specification, and the like. One of skill in the art can readily ascertain the structure of a compound if given a name, either by systemic reduction of the compound structure using naming conventions, or by commercially available software, such as CHEMDRAW^{™} (Cambridgesoft Corporation, U.S.A.).

As used in the specification and the appended claims, the singular forms "a," "an" and "the" include plural referents unless the context clearly dictates otherwise. Thus, for example, reference to "an elastomer," "an accelerator," or "a reinforcing agent," includes, but is not limited to, two or more such elastomers, accelerators, or reinforcing agents, and the like.

It should be noted that ratios, concentrations, amounts, and other numerical data can be expressed herein in a range format. It will be further understood that the endpoints of each of the ranges are significant both in relation to the other endpoint, and independently of the other endpoint.

The term "alkyl" as used herein is a branched or unbranched saturated hydrocarbon group of preferably 1 to 24 carbon atoms, such as methyl, ethyl, n-propyl, isopropyl, n-butyl, isobutyl, s-butyl, t-butyl, n-pentyl, isopentyl, s-pentyl, neopentyl, hexyl, heptyl, octyl, nonyl, decyl, dodecyl, tetradecyl, hexadecyl, eicosyl and tetracosyl. The alkyl group can be cyclic or acyclic. The alkyl group can be branched or unbranched. The alkyl group can also be unsubstituted or substituted with one or more groups including alkyl, cycloalkyl, alkoxy, amino, ether, halide, hydroxy, nitro, silyl, sulfo-oxo, or thiol, as described herein.

The term "cycloalkyl" as used herein is a non-aromatic carbon-based ring composed of at least three carbon atoms. Examples of cycloalkyl groups include cyclopropyl, cyclobutyl, cyclopentyl, cyclohexyl and norbornyl. The term "heterocycloalkyl" is a type of cycloalkyl group where at least one of the carbon atoms of the ring is replaced with a heteroatom such as nitrogen, oxygen, sulfur, or phosphorus; and is included within the meaning of the term "cycloalkyl." The cycloalkyl group and heterocycloalkyl group can be unsubstituted or substituted with one or more groups including alkyl, cycloalkyl, alkoxy, amino, ether, halide, hydroxy, nitro, silyl, sulfo-oxo, or thiol as described herein.

The term "alkenyl" as used herein is a hydrocarbon group of from preferably 2 to 24 carbon atoms with a structural formula containing at least one carbon-carbon double bond. Asymmetric structures such as (A¹A²)C=C(A³A⁴) are intended to include both the E and Z isomers. This can be presumed in structural formulae herein wherein an asymmetric alkene is present, or it can be explicitly indicated by the bond symbol C=C. The alkenyl group can be unsubstituted or substituted with one or more groups including alkyl, cycloalkyl, alkoxy, alkenyl, cycloalkenyl, alkynyl, cycloalkynyl, aryl, heteroaryl, aldehyde, amino, carboxylic acid, ester, ether, halide, hydroxy, ketone, azide, nitro, silyl, sulfo-oxo, or thiol, as described herein.

The term "cycloalkenyl" as used herein is a non-aromatic carbon-based ring composed of at least three carbon atoms and containing at least one carbon-carbon double bound, i.e., C=C. Examples of cycloalkenyl groups include cyclopropenyl, cyclobutenyl, cyclopentenyl, cyclopentadienyl, cyclohexenyl, cyclohexadienyl and norbornenyl. The term "heterocycloalkenyl" is a type of cycloalkenyl group as defined above and is included within the meaning of the term "cycloalkenyl," where at least one of the carbon atoms of the ring is replaced with a heteroatom such as nitrogen, oxygen, sulfur, or phosphorus. The cycloalkenyl group and heterocycloalkenyl group can be unsubstituted or substituted with one or more groups including alkyl, cycloalkyl, alkoxy, alkenyl, cycloalkenyl, alkynyl, cycloalkynyl, aryl, heteroaryl, aldehyde, amino, carboxylic acid, ester, ether, halide, hydroxy, ketone, azide, nitro, silyl, sulfo-oxo, or thiol as described herein.

The term "alkynyl" as used herein is a hydrocarbon group of 2 to preferably 24 carbon atoms with a structural formula containing at least one carbon-carbon triple bond. The alkynyl group can be unsubstituted or substituted with one or more groups including alkyl, cycloalkyl, alkoxy, alkenyl, cycloalkenyl, alkynyl, cycloalkynyl, aryl, heteroaryl, aldehyde, amino, carboxylic acid, ester, ether, halide, hydroxy, ketone, azide, nitro, silyl, sulfo-oxo, or thiol, as described herein.

The term "cycloalkynyl" as used herein is a non-aromatic carbon-based ring composed of at least seven carbon atoms and containing at least one carbon-carbon triple bound. Examples of cycloalkynyl groups include cycloheptynyl, cyclooctynyl, cyclononynyl, and the like. The term "heterocycloalkynyl" is a type of cycloalkenyl group as defined above and is included within the meaning of the term "cycloalkynyl," where at least one of the carbon atoms of the ring is replaced with a heteroatom such as nitrogen, oxygen, sulfur, or phosphorus. The cycloalkynyl group and heterocycloalkynyl group can be unsubstituted or substituted with one or more groups including alkyl, cycloalkyl, alkoxy, alkenyl, cycloalkenyl, alkynyl, cycloalkynyl, aryl, heteroaryl, aldehyde, amino, carboxylic acid, ester, ether, halide, hydroxy, ketone, azide, nitro, silyl, sulfo-oxo, or thiol as described herein.

The term "aryl" as used herein is a group that contains any carbon-based aromatic group including benzene, naphthalene, phenyl, biphenyl and anthracene. The aryl group can be unsubstituted or substituted with one or more groups including alkyl, cycloalkyl, alkoxy, alkenyl, cycloalkenyl, alkynyl, cycloalkynyl, aryl, heteroaryl, aldehyde, -NH₂, carboxylic acid, ester, ether, halide, hydroxy, ketone, azide, nitro, silyl, sulfo-oxo, or thiol as described herein. The term "biaryl" is a specific type of aryl group and is included in the definition of "aryl." In addition, the aryl group can be a single ring structure or comprise multiple ring structures that are either fused ring structures or attached via one or more bridging groups such as a carbon-carbon bond, such as biaryl to two aryl groups that are bound together via a fused ring structure, as in naphthalene, or are attached via one or more carbon-carbon bonds, as in biphenyl.

The terms "rubber" and "elastomer" may be used herein interchangeably, unless indicated otherwise.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other elastomers than explicitly mentioned in the claims, provided that the phr value of the claimed rubbers/elastomers is in accordance with claimed phr ranges and the amount of all rubbers/elastomers in the composition results in total in 100 parts of rubber/elastomer.

As used herein, the term "uncured composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. **In** some aspects, the uncured rubber composition is a masterbatch.

As used herein, the term "vulcanized rubber composition" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. **In** another aspect, rubber compositions can be cured in molds in order to form finished articles including tires.

As used herein, the term "repeat unit" as referenced in the elastomers described herein are derived from monomers used to produce the partially saturated elastomers. For example, polybutadiene has the repeat unit as provided below.

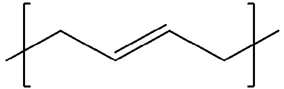

In certain aspects, when the elastomer is the polymerization product of two different monomers (e.g., A and B), the repeat unit can be represented by -A-B-.

As used herein, a "residue" of a chemical species refers to the moiety that is the resulting product of the chemical species in a particular reaction scheme or subsequent formulation or chemical product, regardless of whether the moiety is actually obtained from the chemical species. Thus, an isoprene residue in an elastomer refers to one or more - CH₂CH=C(CH₃)CH₂- units in the elastomer, regardless of whether isoprene was used to prepare the elastomer. Similarly, a butadiene residue in an elastomer refers to one or more - CH₂CH=CHCH₂- moieties in the elastomer, regardless of whether the residue is obtained by reacting sebacic acid or an ester thereof to obtain the polyester.

Unless otherwise specified, temperatures referred to herein are based on atmospheric pressure (i.e. one atmosphere).

### B. RUBBER COMPOSITIONS

In one aspect, the invention relates to compositions, such as uncured or cured rubber compositions, comprising an elastomer, carbon black, a silica, and a reinforcing agent. The compositions disclosed herein exhibit relatively low hysteresis and relatively high adhesion while maintaining good stiffness and processability. Furthermore, processing of the rubber compositions can require no more than two mixing passes or stages. The present invention also relates to methods of making the disclosed compositions and to articles, such as tires and/or components of tires, comprising the compositions.

In one aspect, the present invention relates to compositions comprising: an elastomer; 1 phr to 100 phr of a carbon black selected from a conventional carbon black and a masterbatch carbon black; 1 phr to 20 phr of a silica selected from a conventional silica and a pretreated silica; 0.5 phr to 15 phr of a reinforcing agent, wherein the reinforcing agent is a bismaleimide compound or derivative thereof.

A masterbatch carbon black refers to a high concentration of carbon black, i.e., 10 wt% to 70 wt%, 10 wt% to 60 wt%, or 15 wt% to 50 wt% of carbon black, dispersed in a carrier, a binder, a polymer matrix, or a combination thereof. Examples of conventional carbon black include ASTM classified N-type and S-type carbon blacks, for example N110, N121, N134, S212, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990, N991, or a combination thereof. In one aspect, the conventional carbon black has an iodine absorption value of 9 g/kg to 145 g/kg and/or a dibutylphthalate (DBP) absorption value of 34 cm³/g to 150 cm³/g.

As used herein, "carbon black" refers to the material produced via incomplete combustion of heavy petroleum products using the furnace process. Commercial furnace carbon blacks are derived from controlled combustion of liquid hydrocarbons, allowing precise control over properties such as particle size and structure. Examples include N110, N220, N330, N550, N660, N772, and their blends. Tires typically incorporate multiple types of carbon black, sometimes in combination.

As used herein, "recovered carbon" (rC) and "recovered carbon black" (rCB) refer to carbon material obtained from end-of-life tires (ELTs) through pyrolysis or thermal demanufacturing. Pyrolysis involves heating ELTs in the absence of oxygen, producing a solid carbonaceous char as a co-product. This co-product may contain relatively low levels of crystalline silica compared to ground coal.

There is no limitation herein on the method of pyrolyzing ELTs; illustrative approaches are described in, inter alia, US 10,119,031 B2 and US 11,441,038 B2, with one example of rC characterized in US 12,012,497 B2. Thermal decomposition- also referred to as thermal depolymerization or thermal demanufacturing - is distinguishable from traditional pyrolysis in that it employs an oxidizing agent (e.g., air) to continue tire combustion. No limitation is made herein on the method of thermal demanufacturing ELTs; an illustrative method is described in US 10,703,876 B2.

One example process for converting carbon-containing feedstock into carbon particles is disclosed in US 12,030,776 B2 to Monolith Materials, titled "Systems and Methods for Particle Generation", which is incorporated by reference in its entirety. The method involves generating a plasma - typically comprising at least 60% hydrogen by volume - using plasma-generating electrodes (e.g., in a reactor), and injecting hydrocarbons (e.g., methane, ethane, or unsaturated compounds) to form carbon particles. In one embodiment, the hydrocarbon feedstock may be ELT oil obtained via pyrolysis. When introduced into the hot plasma gas, hydrogen is removed from the hydrocarbon, yielding carbon particles. As used herein, the "carbon particle" is characterized by (i) a statistical thickness surface area (m²/g)/electron microscope surface area (m²/g) (STSA/EMSA) ratio greater than or equal to 1.3, (ii) a lattice constant (L_{c}) greater than 3.0 nanometers (nm), and (iii) an STSA (m²/g)/nitrogen surface area (m²/g) (STSA/N2SA) ratio that is between 1.01 and 1.4, wherein the carbon particle comprises carbon black.

US 10,119,031 B2 to Black Bear Carbon, titled "Method for Obtaining a Carbon Black Powder by Pyrolyzing Scrap Rubber, the Carbon Black Thus Obtained and the Use Thereof", is incorporated by reference herein. It discloses a method for recycling scrap rubber by pyrolyzing it to produce a char material, followed by jet milling with compressed air or steam to obtain a carbon black powder. Pyrolysis is conducted in a multi-stage rotary kiln at controlled temperatures to reduce volatile content. The resulting recovered carbon (rC) is characterized by a particle size distribution of D50 < 10 µm.

US 12,012,497 B2, also to Black Bear Carbon and titled "Recovered Carbon Black and Composite Material Comprising Said Recovered Carbon Black", is incorporated by reference herein. It characterizes one embodiment of recovered carbon (rC) as having an iodine adsorption number, measured according to ASTM D-1510-17, between 95 g/kg and 160 g/kg.

US 11,441,038 B2 to Bolder Industries, titled "Method for Pelletizing Carbon Black Reclaimed from Waste Tires", is incorporated by reference herein. It discloses a process comprising thermal depolymerization of rubber segments to produce carbonaceous material; comminution to reduce agglomerate size; removal of out-of-spec agglomerates; and mixing the remaining material with a binding agent to form pellets. The resulting pellets may be uniform in diameter or a blend of different sizes.

In some embodiments, the recovered carbon (rC) may be a residual material obtained from thermally demanufacturing tires. As described in US 10,703,876 B2 to PRTI, titled *"Apparatus and Method for Thermally Demanufacturing Tires and Other Waste Products" -* incorporated by reference in its entirety - rC can be isolated from a retort chamber used to generate liquid carbonaceous fuels and gaseous products.

The sustainable recovered carbon materials or carbon particles used in the elastomer composites described herein may exist in various forms. These include graphite (including pyrolytic graphite), graphene, turbostratic graphene, recovered carbon black (rCB), fibrous carbon, buckminster fullerenes (e.g., buckyballs), single-wall carbon nanotubes, and multi-wall carbon nanotubes. In one aspect, the carbon material is manufactured by Monolith Materials. In another aspect, it is manufactured by Black Bear Carbon (Netherlands) Bolder Industries (Colorado).

In one embodiment, the composition comprises a blend of conventional carbon black and recovered carbon or carbon particles, each of which may be included as part of a masterbatch or added independently during mixing. In a further aspect, the composition comprises a coupling agent. The coupling agent can include an organosilane compound or a derivative thereof. The organosilane compound or a derivate thereof can be present in the composition in an amount of from 0.1 wt% to 10 wt%, 0.1 wt% to 8 wt%, 0.1 wt% to 6 wt%, 0.1 wt% to 4 wt%, 0.1 wt% to 2 wt%, 2 wt% to 10 wt%, 0.1 wt% to 1 wt, 5 wt% to 10 wt%, or 7 wt% to 10 wt% of the silica. In another aspect, the coupling agent does not comprise an organosilane compound or a derivative thereof. In another aspect, the composition does not comprise an organosilane compound or a derivative thereof.

In another aspect, the compositions can comprise from 1 phr to 100 phr, 10 phr to 100 phr, 20 phr to 100 phr, 30 phr to 100 phr, 1 phr to 90 phr, 1 phr to 80 phr, 1 phr to 70 phr, 10 phr to 90 phr, 10 phr to 80 phr, 20 phr to 80 phr, 20 phr to 70 phr, 20 phr to 60 phr, or 20 phr to 50 phr of a carbon black. In another aspect, the composition can comprise from 1 phr to 20 phr, 1 phr to 15 phr, 1 phr to 10 phr, or 1 phr to 5 phr of the silica. In another aspect, the composition comprises from 0.5 phr to 15 phr, 0.5 phr to 10 phr, 0.5 phr to 5 phr, 1 phr to 15 phr, 1 phr to 10 phr, 1 phr to 15 phr, or 1 phr to 4 phr of the reinforcing agent.

The elastomer can comprise repeat units formed by residues of monomers selected from one or more of ethylene, propylene, isobutene, butadiene, isoprene, styrene, acrylonitrile, and any combination thereof. In another aspect, the elastomer can be selected from isoprene-isobutylene-rubber (Butyl rubber, IIR), halogenated isoprene-isobutylene-rubber (HIIR), ethylene-propylene-diene-terpolymer (EPDM), styrene-butadiene copolymer (SBR), acrylonitrile-butadiene copolymer (AB), acrylonitrile-butadiene-styrene copolymer (ABS), polybutadiene, natural rubber, cis-polyisoprene, and any combination thereof. In a further aspect, the elastomers generally having a number average molecular weight (Mₙ) between 100,000 Da and 500,000 Da. Molecular weight Mₙ is determined by gel permeation chromatography following ASTM D3536 or equivalent.

In one aspect, the silica can be a pretreated silica, such as a pre-silanized silica, and can comprise an alkylsilane, an alkoxysilane, an organoalkoxysilyl polysulfide, or an organomercaptoalkoxysilane bonded to the silica. In another aspect, the pretreated silica can include a silica with a sulfur-containing silane bonded to the silica. In one aspect, the sulfur-containing silane can include an alkoxyorganomercaptosilane or a bis(3-triethoxysilylpropyl)polysulfide, with an average of 2 to 5 connecting sulfur atoms in its polysulfidic bridge. Examples of pre-silanized silicas suitable for use in the compositions described herein include Ciptane^{®} 255 LD and Ciptane^{®} LP (PPG Industries); silicas that have been pre-treated with a mercaptosilane; Coupsil^{®} 8113 (Degussa); Coupsil^{®} 6508; and Agilon^{®} 400, 454, and 458 silica from PPG Industries.

In one aspect, the pretreated silica can be treated with a silica dispersing aid. Such silica dispersing aids may include amines, amides, glycols, such as fatty acids, diethylene glycols, polyethylene glycols, fatty acid esters of hydrogenated or non-hydrogenated C5 or C6 sugars, and polyoxyethylene derivatives of fatty acid esters of hydrogenated or non-hydrogenated C5 or C6 sugars. Exemplary fatty acids include stearic acid, palmitic acid and oleic acid. Exemplary fatty acid esters of hydrogenated and non-hydrogenated C5 and C6 sugars (e.g., sorbose, mannose, and arabinose) include the sorbitan oleates (such as sorbitan monooleate, dioleate, trioleate, and sesquioleate) as well as sorbitan esters of laurate, palmitate, and stearate fatty acids. Exemplary polyoxyethylene derivatives of fatty acid esters of hydrogenated and non-hydrogenated C5 and C6 sugars include polysorbates and polyoxyethylene sorbitan esters, which are analogous to the fatty acid esters of hydrogenated and non-hydrogenated sugars noted above except that ethylene oxide groups are placed on each of the hydroxyl groups. Example of amine and amide compounds can include diphenyl guanidine or any C1-C20 alkyl amine or C1-C20 alkyl amide.

The silica can also be a conventional silica, i.e., a non-pretreated silica. The conventional silica can include precipitated silica, such as those obtained by the acidification of a soluble silicate, e.g., sodium silicate. Conventional silicas can be characterized by a Brunauer-Emmett-Teller (BET) surface area, as measured using nitrogen gas. In one aspect, the BET surface area can be in the range of 40 m2/g to 600 m2/g or 80 m2/g to 300 m2/g. The BET method of measuring surface area is described in the Journal of the American Chemical Society, Volume 60, Page 304 (1930). In a further aspect, the conventional silica can be characterized by having a DBP absorption value in a range of 100 cm³/g to 400 cm³/g or 150 cm³/g to 300 cm³/g. In one aspect, the conventional silica can have an average ultimate particle size in the range of 0.01 µm to 0.05 µm as determined by an electron microscope. In other aspects, the silica particles are smaller than 0.01 µm. In other aspects, the silica particles are larger than 0.05 µm. In one aspect, commercially available silicas are used, such as silicas commercially available from PPG Industries under the Hi-Sil trademark (with designations 210 or 243 for instance); silicas available from Rhodia (with designations of Z1165MP and Z165GR); and silicas available from Degussa AG (with designations of VN2 or VN3 for instance). In another aspect, silica obtained from rice husk ash (RHA) can be used. Rice husks are a renewable resource that can be used to create modified silica particles. Examples of commercial RHA silicas include NZEROSIL-brand silicas (e.g., granulated NZEROSIL RH-255EG, microgranular NZEROSIL RH-350MG, and high surface area granulated NZEROSIL RH-230G). These silicas can be readily obtained from Oriental Silicas Corp. of Taiwan.

The reinforcing agent can be a bismaleimide compound or a derivative thereof. In one aspect, the reinforcing agent has a formula represented by the following structure: 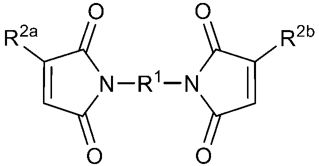 wherein R¹ can be an alkyl group, an alkenyl group, an alkynyl group, a cycloalkyl group, a cycloalkenyl group, a cycloalkynyl group, or an aryl group; and R^{2a} and R^{2b} can be individually selected from a hydrogen and an alkyl group. In a further aspect, R¹ can be an aryl group comprising no more than two aromatic rings. In a further aspect, R^{2a} and R^{2b} can both be hydrogen. In another aspect, the reinforcing agent can be selected from the group consisting of N,N'-ethylene-bismaleimide; N,N'-butylene-bismaleimide; N,N'-(m-phenylene)bismaleimide; N,N'-(p-phenylene)bismaleimide; N,N'-hexamethylene-bismaleimide; N,N'-4,4'-diphenylmethane-bismaleimide; N,N'-4,4'-diphenylether-bismaleimide; N,N'-4,4'-diphenylsulfonebismaleimide; N,N'-4,4'-dicyclohexylethane-bismaleimide; N,N'-xylylene-bismaleimide; N,N'-diphenylcyclohexane-bismaleimide; N,N'-(p-tolylene)bismaleimide; N,N'-(methylenedi-p-phenylene)bismaleimide; N,N'-(oxydi-p-phenylene)bismaleimide; α,α-bis-(4-phenylene)bismaleimide; N,N'-(m-xylylene)biscitraconimide; α,α-bis-(4-maleimidophenyl)meta-diisopropylbenzene; and a combination thereof.

The compositions disclosed herein can further include 0.1 phr to 10.0 phr, 0.5 phr to 10.0 phr, or 0.5 phr to 5.0 phr of a vulcanizing or curing agent. The vulcanizing agent can include elemental sulfur, a sulfur-containing silane, or a combination thereof. Additionally, the uncured rubber composition can further include an accelerator. Accelerators can be preferably but not necessarily used to control the time and/or temperature required for vulcanization and to improve the properties of a vulcanized composition. The composition can include a vulcanizing accelerator in the amount of 0.1 phr to 10.0 phr, 0.5 phr to 10.0 phr, or 0.5 phr to 5.0 phr. Examples of accelerators include sulfenamides (e.g., N-cyclohexyl-2-benzothiazolesulfenamide, N-tertbutyl-2-benzothiazolesulfenamide); dithiocarbamates (e.g., zinc diethyl dithiocarbamate, zinc N-dibutyl dithiocarbamate); thiazoles (e.g., 2-mercaptobenzothiazole, 2,2'-dithiobenzothiazol); and guanidines (e.g., diphenylguanidine, 1,3-di-o-tolylguanidine).

The compositions can comprise additional components, such as an oil, zinc oxide, fatty acids, retarders, and/or anti-degradants. **In** one aspect, the oil is a processing oil. The processing oil can be included in the composition as an extending oil typically used to extend elastomers. The processing oil can also be included in the elastomer composition by addition of the oil directly during rubber compounding. The processing oil used can include both an extending oil present in the elastomers and a process oil added during compounding. Suitable processing oils include various oils as are known in the art, including aromatic, paraffinic, naphthenic, vegetable oils, and low PCA oils, such as MES, TDAE, SRAE, and heavy naphthenic oils. Suitable vegetable oils include, for example, soybean oil, sunflower oil, and canola oil which are in the form of esters containing a certain degree of unsaturation. Examples of fatty acids include stearic acid, palmitic acids, oleic acid, and mixtures thereof. Anti-degradants can include antioxidants and antiozonants. Representative antioxidants include phenylene diamine compounds (e.g., diphenyl-p-phenylenediamine), hydroquinoline compounds (e.g., anti-polymerized trimethyl dihydroquinoline), amine compounds, dithiocarbamate compounds, phenolic compounds, phosphite compounds, toluimidazole compounds, and others, such as those disclosed in The Vanderbilt Rubber Handbook (1978), Pages 344 through 346. Representative antiozonants include N-phenyl-N'-(1,3-dimethylbutyl)-p-phenylenediamine (6PPD) and N,N'-dixylene-p-phenylenediamine (DTPD). Retarders can include phthalic anhydrides, N-(cyclohexylthio)phthalimide, benzoic acid, salicylic acid, and sulfonamide.

Described herein are vulcanized or cured rubber compositions, where any of the compositions described herein have been vulcanized. **In** one aspect, the vulcanized rubber compositions have improved stiffness, hysteresis, and adhesion properties compared to equivalent cured composition that do not include the reinforcing agent.

The vulcanized rubber compositions can have a stiffness that is at least 10% higher or, in another aspect, from 10% to 30% higher than the stiffness of an equivalent composition that does not comprise the reinforcing agent. Stiffness of a composition is indicated by one of the dynamic storage modulus of the vulcanized rubber composition (measured at a dynamic strain amplitude of 1%, 10%, 15%, or 50%, at a temperature of 100 °C, and a frequency of 1 Hz) or the tensile modulus of the vulcanized rubber composition (measured at 100%, 200%, or 300%). In another aspect, the vulcanized rubber compositions can have a normalized hysteresis loss that is equal to, lower than, or at least 2% lower than the normalized hysteresis loss of an equivalent composition that does not comprise the reinforcing agent. In a further aspect, the vulcanized rubber compositions can have a normalized hysteresis loss that is 2% to 10% lower than the normalized hysteresis loss of an equivalent composition that does not comprise the reinforcing agent. Normalized hysteresis loss can be measured by one of the tan d (measured at a dynamic strain amplitude of 10%, a temperature of 100 °C, and a frequency of 1 Hz) or the rebound resilience (in accordance with ASTM D7121, measured at a temperature of 100 °C). Tan d can be quantified as the ratio of the loss modulus (G") to the storage shear modulus, i.e., G"/G'. In another aspect, the vulcanized rubber compositions can have a fabric cord adhesion that is at least 5% greater or at least 10% greater or, in another aspect, 10% to 30% greater than the fabric cord adhesion of an equivalent composition that does not comprise the reinforcing agent, where the fabric cord adhesion is measured at a temperature of 100 °C against nylon fabric and polyester fabric. Further details regarding methods for testing the various properties of the compositions can be found in the Examples.

### C. PREPARATION AND APPLICATIONS OF RUBBER COMPOSITIONS

The compositions disclosed herein can be compounded by methods generally known in the rubber compounding art, such as mixing the elastomer, recovered carbon particles and/or carbon black, silica, and reinforcing agent with various vulcanizable constituent rubbers and various commonly used additive materials such as: curing/vulcanizing agents, such as sulfur donors (e.g., elemental sulfur); curing aids, such as activators, accelerators, and retarders; processing additives such as oils, resins (including tackifying resins), and plasticizers; fillers, such as the recovered carbon particles and/or carbon black and silica; pigments; fatty acids; zinc oxide; waxes; antidegradants, such as antioxidants and antiozonants; and peptizing agents. Depending on the intended use of the vulcanizable and vulcanized material (rubbers), the additives mentioned above are selected and commonly used in conventional amounts. In one aspect, zinc oxide can be included in the rubber compositions in amounts of 1 phr to 5 phr. In another aspect, processing additives can be included in the rubber compositions in amounts of 1 phr to 50 phr. In a further aspect, resins can be included in amounts of 0.5 phr to 10 phr or 0.5 phr to 5 phr. In another further aspect, oils can be included in amounts of 0.5 phr to 10 phr or 0.5 phr to 5 phr. In another aspect, antidegradants, including antioxidants and antiozonants, can be included in amounts of 0.5 phr to 15 phr or 0.5 phr to 10 phr. Representative antidegradants include those listed previously. In one aspect, fatty acids are included in amounts of 0.5 phr to 3 phr. Examples of fatty acids include stearic acid, palmitic acids, oleic acid, and mixtures thereof. In one aspect, waxes are included in amounts of 1 phr to 5 phr. Microcrystalline waxes, paraffinic waxes, and combinations thereof can be used. In another aspect, curing/vulcanizing agents can be included in amounts of 0.1 phr to 10.0 phr, 0.5 phr to 10.0 phr, or 0.5 phr to 5.0 phr. In another aspect, curing aids, including activators, accelerators, and retarders, can be included in amounts of 0.1 phr to 10.0 phr, 0.5 phr to 10.0 phr, or 0.5 phr to 5.0 phr. Representative accelerators and retarders include those listed previously.

The ingredients can be mixed in at least two stages, namely, at least one nonproductive stage followed by a productive mix stage. **In** one aspect, the mixing of the uncured composition comprises only a single nonproductive stage. The final curatives including curing or vulcanizing agents may be typically mixed in the final stage, conventionally called the "productive" mix stage. In the productive mix stage, mixing typically occurs at a temperature, or ultimate temperature, lower than the mix temperature(s) of any preceding nonproductive mix stage(s). In one aspect, the mixing stages can comprise thermomechanical mixing, generally characterized by mechanical working in a mixer (e.g., internal batch mixer) or extruder for a period of time at an elevated temperature suitable to produce a rubber. The appropriate duration of the thermomechanical mixing varies as a function of the operating conditions and the volume and nature of the components. For example, the thermomechanical mixing may be from 0.5 to 10 minutes.

In one aspect, the method for mixing rubber can comprise a nonproductive stage and a productive stage. The nonproductive stage can include combining together an elastomer, 1 phr to 20 phr of a conventional silica, and 10 phr to 100 phr of a recovered carbon particles, thereby forming an initial mixture; and mixing the initial mixture at a temperature of 130 °C to 180 °C, thereby forming a nonproductive mixture. The productive stage can include combining together the nonproductive mixture with 0.5 phr to 15 phr of a bismaleimide compound or a derivative thereof and a curing agent, thereby forming an intermediate mixture; and mixing the intermediate mixture at a temperature of 90 °C to 110 °C, thereby forming a productive mixture. In another aspect, the method for mixing rubber consists of a single nonproductive stage and a single productive stage.

This invention also provides for articles that incorporate any of the compositions disclosed herein. In one aspect, the article comprises a tire, such as a pneumatic tire, or a component of a tire. The tire can be a race tire, passenger tire, aircraft tire, agricultural tire, off-the-road tire, truck or bus tire, or the like. The tire can also be a radial or bias. The component of the tire can be a tread, base, sidewall, apex, chafer, sidewall insert, overlay, wirecoat, innerliner, or a combination thereof. In another aspect, the component of the tire including the composition can be a tread, base, sidewall, apex, overlay, wirecoat, ply coat or any combination thereof. Vulcanization of the disclosed tires is generally carried out at conventional temperatures ranging from 100 °C to 200 °C or from 110 °C to 180 °C. Such tires can be built, shaped, molded and cured by various methods which are known and will be readily apparent to those having skill in such art.

### D. ASPECTS

The following listing of exemplary aspects supports and is supported by the invention provided herein.

Aspect 1. A composition, comprising an elastomer; 1 phr to 100 phr of recovered carbon particles; 1 phr to 20 phr of a silica, selected from a conventional silica and a pretreated silica; and 0.5 phr to 15 phr of a reinforcing agent, wherein the reinforcing agent is a bismaleimide compound or derivative thereof.

Aspect 2. The composition of aspect 1, wherein the composition further comprises a coupling agent.

Aspect 3. The composition of aspect 1, wherein the composition further comprises a coupling agent comprising an organosilane compound or a derivative thereof.

Aspect 4. The composition of aspect 3, wherein the organosilane compound or derivative thereof is present in the composition in a weight percentage of from 0.1% to 10% of the silica.

Aspect 5. The composition of aspect 3, wherein the organosilane compound or derivative thereof is present in the composition in a weight percentage of from 0.1% to 5% of the silica.

Aspect 6. The composition of aspect 1, wherein the composition further comprises a coupling agent that does not comprise an organosilane compound or a derivative thereof.

Aspect 7. The composition of aspect 1, wherein the composition does not comprise an organosilane compound or a derivative thereof.

Aspect 8. The composition of any one of aspects 1-7, wherein the composition comprises from 20 phr to 80 phr of the recovered carbon.

Aspect 9. The composition of any one of aspects 1-8, wherein the composition comprises from 1 phr to 15 phr of the silica.

Aspect 10. The composition of any one of aspects 1-9, wherein the composition comprises from 1 phr to 4 phr of the reinforcing agent.

Aspect 11. The composition of any one of aspects 1-10, wherein the reinforcing agent has a formula represented by the following structure: 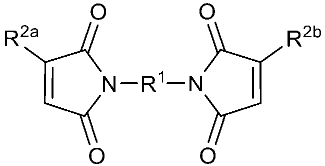 wherein, R¹ is an alkyl group, an alkenyl group, an alkynyl group, a cycloalkyl group, a cycloalkenyl group, a cycloalkynyl group, or an aryl group; and R^{2a} and R^{2b} are individually selected from a hydrogen and an alkyl group.

Aspect 12. The composition of aspect 11, wherein R¹ is an aryl group comprising no more than two aromatic rings.

Aspect 13. The composition of aspect 11 or aspect 12, wherein R^{2a} and R^{2b} are hydrogen.

Aspect 14. The composition of any one of aspects 1-11, wherein the reinforcing agent is selected from the group consisting of N,N'-ethylene-bismaleimide; N,N'-butylene-bismaleimide; N,N'-(m-phenylene)bismaleimide; N,N'-(p-phenylene)bismaleimide; N,N'-hexamethylene-bismaleimide; N,N'-4,4'-diphenylmethane-bismaleimide; N,N'-4,4'-diphenylether-bismaleimide; N,N'-4,4'-diphenylsulfone-bismaleimide; N,N'-4,4'-dicyclohexylethane-bismaleimide; N,N'-xylylene-bismaleimide; N,N'-diphenylcyclohexane-bismaleimide; N,N'-(p-tolylene)bismaleimide; N,N'-(methylenedi-p-phenylene)bismaleimide; N,N'-(oxydi-p-phenylene)bismaleimide; α,α-bis-(4-phenylene)bismaleimide; N,N'-(m-xylylene)biscitraconimide; α,α-bis-(4-maleimidophenyl)metadiisopropylbenzene; and any combination thereof.

Aspect 15. The composition of any one of aspects 1-11, wherein the reinforcing agent is N,N'-m-phenylene-bismaleimide.

Aspect 16. The composition of any one of aspects 1-15, wherein the elastomer comprises repeat units formed from residues of monomers selected from one or more of ethylene, propylene, isobutene, butadiene, isoprene, styrene, acrylonitrile, and any combination thereof.

Aspect 17. The composition of any one of aspects 1-16, wherein the elastomer comprises isoprene-isobutylene-rubber, halogenated isoprene-isobutylene-rubber, ethylene-propylene-diene-terpolymer, styrene-butadiene rubber, acrylonitrile-butadiene rubber, acrylonitrile-butadiene-styrene copolymer, polybutadiene, natural rubber, cis polyisoprene, or any combination thereof.

Aspect 18. The composition of any one of aspects 1-17, wherein the elastomer comprises natural rubber and styrene butadiene rubber.

Aspect 19. A vulcanized rubber composition, comprising the composition of any one of aspects 1-18 that has been vulcanized.

Aspect 20. An article comprising the vulcanized rubber composition of aspect 19.

Aspect 21. The article of aspect 20, wherein the article comprises a tire or a component of a tire.

Aspect 22. The article of aspect 21, wherein the component of the tire comprises a tread, base, sidewall, overlay, apex, wirecoat, ply coat , or any combination thereof.

Aspect 23. A composition, comprising an elastomer; 1 phr to 100 phr of a recovered carbon or carbon black, selected from a a component of masterbatch or a freely added filler material, 1 phr to 20 phr of a conventional silica; and 0.5 phr to 15 phr of a reinforcing agent, wherein the reinforcing agent is a bismaleimide compound or a derivative thereof.

Aspect 24. The composition of aspect 23, wherein the composition further comprises a coupling agent.

Aspect 25. The composition of aspect 23, wherein the composition further comprises a coupling agent comprising an organosilane compound or a derivative thereof.

Aspect 26. The composition of aspect 25, wherein the organosilane compound or derivative thereof is present in the composition in a weight percentage of from 0.1% to 10% of the silica.

Aspect 27. The composition of aspect 25, wherein the organosilane compound or derivative thereof is present in the composition in a weight percentage of from 0.1% to 5% of the silica.

Aspect 28. The composition of aspect 23, wherein the composition further comprises a coupling agent that does not comprise an organosilane compound or a derivative thereof.

Aspect 29. The composition of aspect 23, wherein the composition does not comprise an organosilane compound or a derivative thereof.

Aspect 30. A vulcanized rubber composition, comprising the composition of any one of aspects 23-30 that has been vulcanized.

Aspect 31. The vulcanized rubber composition of aspect 30, wherein the vulcanized rubber composition has a stiffness that is at least 10% higher than the stiffness of an equivalent composition that does not comprise the reinforcing agent; and wherein the stiffness is indicated by one of the dynamic storage modulus of the vulcanized rubber composition, measured at a dynamic strain amplitude of 1%, 10%, 15%, or 50%, at a temperature of 100 °C, and a frequency of 1 Hz, or the tensile modulus of the vulcanized rubber composition, measured at 100%, 200%, or 300%.

Aspect 32. The vulcanized rubber composition of aspect 30 or aspect 31, wherein the vulcanized rubber composition has a stiffness that is 10% to 30% higher than the stiffness of an equivalent composition that does not comprise the reinforcing agent; and wherein the stiffness is indicated by one of the dynamic storage modulus of the vulcanized rubber composition, measured at a dynamic strain amplitude of 1%, 10%, 15%, or 50%, at a temperature of 100 °C, and a frequency of 1 Hz, or the tensile modulus of the vulcanized rubber composition, measured at 100%, 200%, or 300%.

Aspect 33. The vulcanized rubber composition of any one of aspects 30-32, wherein the vulcanized rubber composition has a normalized hysteresis loss that is equal to or lower than the normalized hysteresis loss of an equivalent composition that does not comprise the reinforcing agent; and wherein normalized hysteresis loss is measured by one of the tan δ, measured at a dynamic strain amplitude of 10%, a temperature of 100 °C, and a frequency of 1 Hz, or the rebound resilience, measured at a temperature of 100 °C.

Aspect 34. The vulcanized rubber composition of any one of aspects 30-33, wherein the vulcanized rubber composition has a normalized hysteresis loss, expressed as tan δ, that is 2% to 10% lower than the normalized hysteresis loss of an equivalent composition that does not comprise the reinforcing agent; and wherein normalized hysteresis loss is measured by one of the tan δ, measured at a dynamic strain amplitude of 10%, a temperature of 100 °C, and a frequency of 1 Hz, or the rebound resilience, measured at a temperature of 100 °C.

Aspect 35. The vulcanized rubber composition of any one of aspects 30-34, wherein the vulcanized rubber composition has a fabric cord adhesion that is at least 5% greater than the fabric cord adhesion of an equivalent composition that does not comprise the reinforcing agent; and wherein the fabric cord adhesion is measured at a temperature of 100 °C against nylon fabric and polyester fabric.

Aspect 36. The vulcanized rubber composition of any one of aspects 30-35, wherein the vulcanized rubber composition has a fabric cord adhesion that is at least 10% greater than the fabric cord adhesion of an equivalent composition that does not comprise the reinforcing agent; and wherein the fabric cord adhesion is measured at a temperature of 100 °C against nylon fabric and polyester fabric.

Aspect 37. The vulcanized rubber composition of any one of aspects 30-36, wherein the vulcanized rubber composition has a fabric cord adhesion that is 10% to 30% greater than the fabric cord adhesion of an equivalent composition that does not comprise the reinforcing agent; and wherein the fabric cord adhesion is measured at a temperature of 100 °C against nylon fabric and polyester fabric.

Aspect 38. An article comprising the vulcanized rubber composition of any one of aspects 30-37.

Aspect 39. The article of aspect 38, wherein the article comprises a tire or a component of a tire.

Aspect 40. The article of aspect 39, wherein the component of the tire comprises a tread, base, sidewall, apex, overlay, wirecoat, ply coat , or any combination thereof.

Aspect 41. A method for mixing rubber, comprising a nonproductive stage and a productive stage, wherein the nonproductive stage comprises combining together an elastomer, 1 phr to 20 phr of a conventional silica, and 10 phr to 100 phr of a recovered carbon or carbon black, selected from a component of masterbatch or a freely added filler material, thereby forming an initial mixture; and mixing the initial mixture at a temperature of 130 °C to 180 °C, thereby forming a nonproductive mixture; and the productive stage comprises combining together the nonproductive mixture with 0.5 phr to 15 phr of a bismaleimide compound or a derivative thereof and a curing agent, thereby forming an intermediate mixture; and mixing the intermediate mixture at a temperature of 90 °C to 110 °C, thereby forming a productive mixture.

Aspect 42. The method of aspect 41, wherein the intermediate mixture is formed using 0.5 phr to 5 phr of the curing agent.

Aspect 43. The method of aspect 41 or aspect 42, wherein the nonproductive stage further comprises combining together at least one of a fatty acid, zinc oxide, a processing oil, an antidegradant, or an antioxidant to form the initial mixture.

Aspect 44. The method of any one of aspects 41-43, wherein the productive stage further comprises combining together at least one of an accelerator or a retarder to form the intermediate mixture.

### E. EXAMPLES

The following examples are put forth so as to provide those of ordinary skill in the art with a complete disclosure and description of how the compounds, compositions, articles, devices and/or methods claimed herein are made and evaluated, and are intended to be exemplary of the invention. Unless indicated otherwise, parts are parts by weight, temperature is in °C or is at ambient temperature, and pressure is at or near atmospheric.

### 1. EVALUATION OF RUBBER COMPOSITIONS

Three rubber compositions comprising a polybutadiene rubber and natural rubber-based matrix are provided in Table 1. Notable differences between the compositions include the type of silica used (pretreated vs non-pretreated), the major filler used (carbon black vs. silica), the presence or absence of a silica coupling agent, phenolic resins, and the type of crosslinking agent used. Additionally, the compositions vary in the number of mixing stages, being either a two pass mix or a three pass mix. Reducing the number of mixing passes required to process a rubber composition can reduce cost associated with producing a tire from the rubber composition.

In Table 2, compared to the Control composition, Experimental rubber compositions 1 and 2 have higher stiffness (measured as the dynamic storage modulus, G'); similar or lower hysteresis (tangent delta); higher rebound resilience; and improved tensile mechanical properties. Additionally, the Experimental rubber compositions are produced using only two mix passes. Tires comprising the Experimental rubber compositions are likely to have better rolling resistance compared to tires comprising the Control composition, since lower hysteresis and higher rebound resilience contribute to an overall lower rolling resistance in a tire.

**Table 1: Rubber Compositions - Ingredient amounts given in phr.**

| Ingredient | Mixing Stage | Control | Experimental 1 | Experimental 2 |
|---|---|---|---|---|
| Natural Rubber | NP1 | 65 | 65 | 65 |
| Styrene Butadiene Rubber | NP1 | 35 | 35 | 35 |
| Carbon Black | NP1 | -- | 35 | 35 |
| Precipitated Silica | NP1 | -- | 2.5 | 2.5 |
| Pretreated Silica¹ | NP1 | 35 | -- | -- |
| Processing Oil | NP1 | 1.5 | 3.5 | 3.5 |
| Antioxidant² | NP1 | -- | 1 | 1 |
| Antiozonant³ | NP1 | -- | 1 | 1 |
| Zinc Oxide | NP1 | -- | 3 | 3 |
| Fatty Acid | NP1 | -- | 1 | 1 |
| phenolic resins | NP2 | 2.35 | -- | -- |
| Antioxidant² | NP2 | 1 | -- | -- |
| Zinc Oxide | NP2 | 4 | -- | -- |
| Fatty Acid | NP2 | 2.65 | -- | -- |
| Curing/Vulcanizing agent⁴ | PR | 3.21 | 3.1 | 3.1 |
| Coupling Agent⁵ | PR | 2 | -- | -- |
| Crosslinking Agent⁶ | PR | 1.1 | -- | -- |
| Reinforcing Agent⁷ | PR | -- | 2 | 1 |
| Accelerator⁸ | PR | -- | 1.9 | 1.9 |
| Accelerator⁹ | PR | 1.48 | -- | -- |
| Retarder¹⁰ | PR | 0.1 | 0.1 | 0.1 |
| **Total Parts** | | **154.39** | **154.1** | **153.1** |

| | | | | |
|---|---|---|---|---|
| ¹ AGILON^{®} silica from the Pittsburgh Plate Glass Company ² hydroquinoline compound ³ phenylenediamine compound ⁴ insoluble sulfur ⁵ mixture of high abrasion furnace carbon black and a bifunctional organo-silane including bis [3-(triethoxysily)propyl] tetrasulfide ⁶ 72.5% hexamethoxymethylmelamine on a silica carrier ⁷ N,N'-(m-phenylene)bismaleimide ⁸ sulfenamide compound ⁹ sulfenamide and guanidine compounds ¹⁰ *N*-(cyclohexylthio)phthalimide | | | | |

**Table 2: Physical Properties**

| Property | Control | Experimental 1 | Experimental 2 |
|---|---|---|---|
| Rubber Process Analyzer 505 Properties | | | |
| Storage Modulus (G')¹, Uncured (MPa) | 0.189 | 0.201 | 0.19 |
| G' (MPa) at 1% strain amplitude² | 0.992 | 1.172 | 1.105 |
| G' (MPa) at 10% strain amplitude² | 0.951 | 1.081 | 1.028 |
| G' (MPa) at 15% strain amplitude² | 0.937 | 1.052 | 1.002 |
| G' (MPa) at 50% strain amplitude² | 0.751 | 0.835 | 0.806 |
| Tangent Delta at 10% strain³ | 0.029 | 0.029 | 0.027 |

| Zwick Rebound Test Properties⁴ | | | |
|---|---|---|---|
| Rebound (%) | 82.39 | 84.15 | 84.15 |

| Tensile Mechanical Properties⁵ | | | |
|---|---|---|---|
| 100% Modulus (MPa) | 1.78 | 2.06 | 2.03 |
| 200% Modulus (MPa) | 4.56 | 5.55 | 5.34 |
| 300% Modulus (MPa) | 9.48 | 10.3 | 9.84 |
| Tensile Strength (MPA) | 12.98 | 13.89 | 13.09 |
| Elongation at Break (%) | 356 | 373 | 365 |
| Energy to Break | 5.89 | 7.15 | 6.32 |

| Hot U-Adhesion (Fabric Adhesion) | | | |
|---|---|---|---|
| Maximum Force (N)⁶ | 140 | 174 | 174 |
| Maximum Force (N)⁷ | 137 | 163 | 152 |

| Global Strebler Adhesion⁸ | | | |
|---|---|---|---|
| Steady State Average Load (N) | 18.27 | 26.24 | 20.75 |
| Strebler (N/mm) | 3.88 | 5.4 | 4.06 |
| Average Force @ Average Value (N) | 21.08 | 27.96 | 19.9 |

| Global Fabric Strebler Adhesion⁹ | | | |
|---|---|---|---|
| Steady State Average Load (N) | 7.38 | 12.17 | 8.58 |
| Strebler (N/mm) | 1.54 | 2.69 | 1.85 |
| Average Force @ Average Value (N) | 15.13 | 18.24 | 16.23 |

| | | | |
|---|---|---|---|
| ¹ measured at a 15% strain amplitude, temperature of 100 °C, and frequency of 0.83 Hz ² measured at a temperature of 100 °C and frequency of 1 Hz ³ measured at a 10% strain amplitude, temperature of 100 °C, and frequency of 1 Hz ⁴ measured at a temperature of 100 °C in accordance with ASTM D7121 ⁵ measured in accordance with ASTM D412 ⁶ adhesion to polyester ⁷ adhesion to nylon ⁸ adhesion to self at 100 °C ⁹ adhesion to nylon at 100 °C | | | |

As shown supra, Experimental rubber compositions 2 and 3 are strong directional indicators showing improvement. In Table 3, a recovered carbon particle, comprising carbon black is used in place of the conventional carbon black. Compared to the Experimental rubber compositions 1 and 2, it is shown in Table 4 that Experimental rubber compositions 3 and 4 (comprising bio-CB) have higher stiffness (measured as the dynamic storage modulus, G'); similar or lower hysteresis (tangent delta); higher rebound resilience; and improved tensile mechanical properties. Additionally, the Experimental rubber compositions 4 and 5 are produced using only two mix passes, thus improving production efficiency. Tires comprising the Experimental rubber compositions 3 and 4 also have better rolling resistance compared to tires comprising the Control composition (Table 1), since lower hysteresis and higher rebound resilience contribute to an overall lower rolling resistance in a tire.

**Table 3: Rubber Compositions - Ingredient amounts given in phr.**

| Ingredient | Mixing Stage | Experimental 3 | Exp 4 (bio-CB) | Exp 5 (bio-CB) |
|---|---|---|---|---|
| Natural Rubber | NP1 | 65 | 65 | 65 |
| Styrene Butadiene Rubber | NP1 | 35 | 35 | 35 |
| Carbon Black | NP1 | 35 | | |
| | | | 35 | 40 |
| Precipitated Silica | NP1 | 2.5 | 2.5 | 2.5 |
| Processing Oil | NP1 | 3.5 | 3.5 | 3.5 |
| Antioxidant² | NP1 | 1 | 1 | 1 |
| Antiozonant³ | NP1 | 1 | 1 | 1 |
| Zinc Oxide | NP1 | 3 | 3 | 3 |
| Fatty Acid | NP1 | 1 | 1 | 1 |
| Curing/Vulcanizing agent⁴ | PR | 3.1 | 3.1 | 3.1 |
| Reinforcing Agent⁷ | PR | 2 | 2 | 2 |
| Accelerator⁸ | PR | 1.9 | 1.9 | 1.9 |

**Table 4: Physical Properties**

| Property | Experimental 3 | Exp 4 (bio-CB) | Exp 5 (bio-CB) |
|---|---|---|---|
| Sustainability material content % | 44.5 | 67.2 | 68.2 |
| Storage Modulus (G')¹, Uncured (MPa) | | | |
| G' (MPa) at 1% strain amplitude² | | | |
| G' (MPa) at 10% strain amplitude² | 1.02 | 1.03 | 1.14 |
| G' (MPa) at 15% strain amplitude² | 0.22 | 0.22 | 0.23 |
| G' (MPa) at 50% strain amplitude² | 0.88 | 0.91 | 0.97 |
| Tangent Delta at 10% strain³ | 0.029 | 0.023 | 0.028 |
| Rebound (%) | 83.12 | 84.15 | 82.35 |
| 100% Modulus (MPa) | 2.19 | 2.06 | 2.43 |
| 200% Modulus (MPa) | 5.64 | 4.94 | 5.77 |
| 300% Modulus (MPa) | 10.37 | 8.91 | 9.98 |
| Tensile Strength (MPA) | 17.71 | 15.16 | 16.22 |
| 16E22longation at Break (%) | 434 | 425 | 429 |
| Energy to Break | 11.80 | 10.47 | 9.36 |
| Maximum Force (N)⁶ | | | |
| Maximum Force (N)⁷ | | | |
| Steady State Average Load (N) | | | |
| Strebler (N/mm) | | | |
| HOT U Adhesion (220) to polyester (N) | 182 | 182 | 172 |
| HOT U Adhesion (220) to nylon (N) | 131 | 153 | 162 |
| Seat Cord Adhesion Rt (225) polyester | 157 | 160 | 179 |
| Seat Cord Adhesion Rt (225) nylon | 177 | 157 | 191 |

Properties of a rubber composition can be determined before, during, or after cure using a rubber process analyzer. Rubber composition Experimental 1 has a similar uncured storage modulus to the Control rubber composition (Table 2), indicating that they have a similar uncured viscosity. For properties of a cured rubber composition provided in Table 2 (storage modulus, G', and tan delta), the rubber composition was cured in a testing cavity at a temperature of 191 °C at 3.5% strain amplitude at 1.7 Hz for 4.88 minutes prior to obtaining the values. Stiffness of a rubber composition can be characterized using the dynamic storage modulus value of the composition. A larger storage shear modulus value indicates a stiffer compound. The Experimental rubber compositions exhibit a higher stiffness (ranging from 7% to 18% higher) compared to the Control composition.

Tangent delta (tan δ) is the ratio of the loss modulus (G") to the dynamic storage modulus, i.e., G"/G', of the cured rubber composition. A higher tan δ indicates more energy loss per stiffness of a compound. Tan δ provides a means of measuring hysteresis, or the amount of energy lost per cycle during deformation of an elastomer. Since hysteresis accounts for the majority of rolling resistance, an elastomer or composition with a lower tan delta can indicate a lower rolling resistance for a tire comprising said elastomer or composition. The Experimental rubber compositions exhibit the same or lower tan δ (ranging from 0% to 7% lower) compared to the Control composition.

The Zwick Rebound test can be used to determine the resilience of rubber (rebound resilience), within a range of impact strain and strain rate, by means of the impacting and measuring apparatus conforming to the requirements described in the test method according to ASTM D7121. The test is conducted at a sample temperature of 100 °C. Resilience is recorded as pendulum rebound height after the pendulum hits a rubber sample. The higher the rebound value, the less energy is loss due to the pendulum's impact on the rubber sample. At 100 °C, higher rebound can be associated with lower hysteresis and a lower tire rolling resistance. The Control and Experimental rubber compositions were cured at 170 °C for 10 minutes prior to testing. The Experimental rubber compositions exhibit a higher rebound value ( 2% higher) compared to the Control composition.

A cured/vulcanized rubber composition's tensile mechanical properties, such as tensile stress, modulus at various strains, and elongation at break, can be measured using the ASTM D412 test procedure. Briefly, a Die C dumbbell shaped rubber sample of known dimensions is placed in an extensometer and then clamped in grips of a force displacement machine. The rubber sample is pulled at a set rate of 500 mm/min until it breaks. The Control and Experimental rubber compositions were cured at 170 °C for 10 minutes prior to testing. The Experimental rubber compositions exhibit higher stiffness (ranging from 4% to 21% higher), higher tensile strength (ranging from 1% to 7% higher), greater elongation at break (ranging from 3% to 5% longer), and higher energy to break (ranging from 7% to 21% higher) compared to the Control composition.

The hot U-adhesion test is used as a rapid method of evaluating the relative adhesion of various types of dipped cord to rubber. Dipped cord samples are embedded in a 6.35 mm (1/4 inch) strip of rubber using a special mold and inserts. The inserts are held in a heater block and cords pulled from the rubber using a pulley type holder. The maximum force required to pull each cord from the rubber is recorded. The higher force to pull out the cord, the better rubber-cord adhesion. Prior to testing, the Control and Experimental rubber compositions were cured at 170 °C for 23 minutes. For the hot U-adhesion tests reported herein, a preheat time of 3 minutes and a pulling speed of 305 cm/min was used. The Experimental rubber compositions exhibit a higher adhesion to both polyester (24% higher) and nylon (ranging from **11%** to 19% higher) compared to the Control composition.

The Strebler adhesion test measures the interfacial adhesion of cured rubber compounds by pulling a sample in a T-peel manner using a force displacement machine. A defined area, or window, created by a mask between the surfaces of the sample is subjected to the test. Samples may consist of two layers of the same compound, or two different compounds adhered together (Global Strebler), to determine the adhesion between rubbers. Variations in surface treatment can also be used (such as fabric, Global Fabric Strebler) to determine the adhesion between rubber and fabric. The higher the force to peel off, the higher adhesion. Prior to testing, the Control and Experimental rubber compositions were cured at 170 °C for **11** minutes or 23 minutes for measuring Strebler adhesion and fabric Strebler adhesion, respectively. For the tests reported herein, a pulling speed of 500 mm/min was used along with a curing pressure of 0.69 MPa (100 psi). Composition Experimental 1 exhibits higher adhesion to both itself (33% higher, average force @ average value) and nylon (21% higher, average force @ average value) compared to the Control composition. Rubber composition Experimental 2 exhibits higher adhesion to nylon (7% higher for average force @ average value) compared to the Control composition.

## Claims

1. A composition comprising: an elastomer; 1 phr to 100 phr of a recovered carbon or carbon particle, the recovered carbon or carbon particle being disbursed in a masterbatch or freely added material; 1 phr to 20 phr of a silica selected from a conventional silica and a pretreated silica; and 0.5 phr to 15 phr of a reinforcing agent, wherein the reinforcing agent is a bismaleimide compound or a derivative thereof.

2. The composition of claim 1, wherein the composition further comprises a coupling agent comprising an organosilane compound or a derivative thereof, wherein the organosilane compound or derivative thereof is present in the composition in a weight percentage of from 0.1% to 10% of the silica.

3. The composition of claim 1, wherein the composition does not comprise an organo-silane compound or a derivative thereof.

4. The composition of at least one of the previous claims, wherein the composition comprises from 20 phr to 80 phr of the recovered carbon or carbon particle and/or wherein the composition comprises from 1 phr to 35 phr of the silica.

5. The composition of at least one of the previous claims, wherein the composition comprises from 1 phr to 4 phr of the reinforcing agent.

6. The composition of at least one of the previous claims, wherein the reinforcing agent has a formula represented by the following structure: 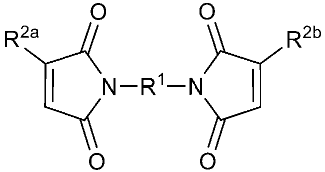 wherein R¹ is an alkyl group, an alkenyl group, an alkynyl group, a cycloalkyl group, a cycloalkenyl group, a cycloalkynyl group, or an aryl group; and R^{2a} and R^{2b} are individually selected from a hydrogen and an alkyl group.

7. The composition of at least one of the previous claims, wherein R¹ is an aryl group comprising no more than two aromatic rings; and/or wherein the reinforcing agent is selected from the group consisting of N,N'-ethylene-bismaleimide; N,N'-butylene-bismaleimide; N,N'-(m-phenylene)bismaleimide; N,N'-(p-phenylene)bismaleimide; N,N'-hexamethylene-bismaleimide; N,N'-4,4'-diphenylmethane-bismaleimide; N,N'-4,4'-diphenylether-bismaleimide; N,N'-4,4'-diphenylsulfone-bismaleimide; N,N'-4,4'-dicyclohexylethane-bismaleimide; N,N'-xylylene-bismaleimide; N,N'-diphenylcyclohexane-bismaleimide; N,N'-(p-tolylene)bismaleimide; N,N'-(methylenedi-p-phenylene)bismaleimide; N,N'-(oxydi-p-phenylene)bismaleimide; α,α-bis-(4-phenylene)bismaleimide; N,N'-(m-xylylene)biscitraconimide; α,α-bis-(4-maleimidophenyl)me-tadiisopropylbenzene; and any combination thereof.

8. The composition of at least one of the previous claims, wherein the elastomer comprises repeat units formed from residues of monomers selected from one or more of ethylene, propylene, isobutene, butadiene, isoprene, styrene, acrylonitrile, and any combination thereof.

9. A vulcanized composition, comprising the composition of at least one of the previous claims that has been vulcanized.

10. The vulcanized composition of claim 9, wherein the vulcanized composition has a stiffness that is at least 10% higher than the stiffness of an equivalent composition that does not comprise the reinforcing agent, wherein the stiffness is indicated by one of the dynamic storage modulus of the vulcanized rubber composition, measured at a dynamic strain amplitude of 1%, 10%, 15%, or 50%, at a temperature of 100 °C and a frequency of 1 Hz.

11. The vulcanized composition of claim 9 or 10, wherein the vulcanized composition has a tensile modulus that is at least 10% higher than the tensile modulus of an equivalent composition that does not comprise the reinforcing agent, the tensile modulus of the vulcanized rubber composition being measured at 100%, 200%, or 300%.

12. The vulcanized composition of claim 9 or 11, wherein the vulcanized composition has a fabric cord adhesion that is at least 10% greater than the fabric cord adhesion of an equivalent composition that does not comprise the reinforcing agent, wherein the fabric cord adhesion is measured at a temperature of 100 °C against nylon fabric and polyester fabric.

13. An article comprising the vulcanized composition of at least one of the claims 9 to 12.

14. The article of claim 13, wherein the article is or comprises a tire or a component of a tire.

15. A method for mixing a rubber composition, the method comprising a nonproductive stage and a productive stage, wherein the nonproductive stage comprises combining together an elastomer, 1 phr to 20 phr of a conventional silica, and 10 phr to 100 phr of a recovered carbon or carbon particle and mixing the initial mixture at a temperature of 130 °C to 180 °C, thereby forming a nonproductive mixture; and wherein the productive stage comprises combining together the nonproductive mixture with 0.5 phr to 15 phr of a bismaleimide compound or a derivative thereof and 0.5 phr to 5 phr of a curing agent, thereby forming an intermediate mixture; and mixing the intermediate mixture at a temperature of 90 °C to 110 °C, thereby forming a productive mixture.
